# EUROPÄISCHE PATENTSCHRIFT

(11) **EP 1 953 888 B1**
(45) Veröffentlichungstag und Bekanntmachung des Hinweises auf die Patenterteilung: **03.01.2018**
(21) Anmeldenummer: 07019215.8
(22) Anmeldetag: 29.09.2007
(51) Int. Cl.: H02G 3/12, H02G 3/08

(54) **Schalter einer Steuerung einer elektrischen Thermostatarmatur zur Betätigung der Armatur**
Switch in a controller for an electric thermostat console for actuating the console
Commutateur d'une commande d'une armature de thermostat électrique destiné à l'actionnement de l'armature

(30) Priorität: 02.02.2007 EP 07002283
(43) Veröffentlichungstag der Anmeldung: 06.08.2008
(73) Patentinhaber: Gerloff, Michael, Dr., 37269 Eschwege (DE)
(72) Erfinder: Gerloff, Michael, Dr., 37269 Eschwege (DE)
(74) Vertreter: Patentanwälte Walther Hinz Bayer PartGmbB

(56) Entgegenhaltungen:
- WO-A-2006/115593
- FR-A- 2 877 779
- GB-A- 2 311 723
- GB-A- 2 413 956

## Beschreibung

Die vorliegende Erfindung betrifft eine Vorrichtung umfassend einen Schalter einer Steuerung zur Betätigung einer elektrischen Thermostatarmatur, wobei der Schalter durch eine Bohrung in einem Verkleidungselement, z. B. eines Waschtisches oder einer Wand, revisionierbar aufnehmbar ist, wobei der Schalter einen Schalterkörper und einen überstehenden Teller umfasst.

Aus der WO 2006/115593 A2 ist eine Sensoranordnung bekannt, die an einer Wand im Bereich eines Urinals oder einer Toilette angeordnet ist, und die mit einer Einrichtung zur automatischen Spülung des Urinals oder der Toilette verbunden ist.

Die GB 2413956 A beschreibt ein berührungsempfindliches Tastenfeld zum Einstellen der Parameter des aus einem Duschkopf austretenden Wassers.

Aus der FR 2877779 A ist ein Gehäuse zur Aufnahme einer elektronischen Einrichtung bekannt. Das Gehäuse weist eine Öffnung zur Durchführung eines Kabels auf. Um die Gehäuseöffnung herum ist eine mit einer Dichtöffnung versehene Dichtung vorgesehen, die durch eine am Gehäuse angeordnete Brücke gehalten sein kann, die eine Öffnung korrespondierend zur Dichtungsöffnung aufweist. Die Dichtungsöffnung ist im Querschnitt kleiner als das Kabel, so dass sich beim Einschieben des Kabels die Dichtung im Öffnungsbereich in Einschubrichtung verformt. Das Kabel wird durch die Dichtung nicht fixiert, es wird vielmehr lediglich der Durchtritt im gewisse Umfang abgedichtet. Insofern ist die Fixierung eines Schalters durch die Dichtung nicht möglich.

Aus der DE 197 10 800 A1 ist eine Thermostatarmatur bekannt, die mit einem Armaturenauslaufkörper in Verbindung steht, wobei die Thermostatarmatur einen Zulauf für Warmwasser und einen für Kaltwasser aufweist. Darüber hinaus existiert eine Ventileinrichtung zum Mischen und Absperren der über die Zuläufe zugeführten Heiß- und Kaltwasserströme. Die Ventileinrichtung für das Mischen bzw. Absperren umfasst für den Kalt- und Warmwasserstrom jeweils einen Elektromotor, wobei darüber hinaus ein Auslass für das Wasser vorgesehen ist, der mit dem Armaturenauslaufkörper in Verbindung steht. Diese Thermostatarmatur als Aufputzeinheit besitzt ein Bedienfeld und ist mit Hilfe einer gewölbten Klappe abdeckbar. Auf dem Bedienfeld sind verschiedene Tasten vorgesehen, um u. a. die Durchflussmenge und die Temperatur des Wasser zum Armaturenauslaufkörper zu bestimmen. Die gesamte Vorrichtung baut äußerst voluminös und hat sich beim Einbau moderner Bäder insofern auch nicht durchgesetzt.

Moderne Bäder sind im Wesentlichen gekennzeichnet durch glatte Oberflächen, die selbst die Armaturenauslaufkörper kaum noch erkennen lassen. So sind z. B. Duschen bekannt, bei denen die Kopfbrausen in der Decke integriert sind. Aufputzarmaturen, wie sie aus der DE 197 10 800 A1 bekannt sind, wären insofern störend für den ästhetischen Gesamteindruck. Auch die Beschläge für Glaswände und Türen einer Dusche sind so weit minimalisiert, dass ein solches Objekt im Raum zu schweben scheint. Gleiches gilt auch für den Duschboden, der nicht mehr als eigentliche Duschwanne ausgebildet ist, sondern lediglich eine plane Oberfläche mit einem ringförmigen Ablauf zeigt, der von der entsprechenden Glaswand umgeben ist.

Wie bereits ausgeführt, baut die Thermostatarmatur als Aufputzeinheit gemäß der DE 197 10 800 A1 wesentlich zu voluminös. Insofern ist bereits bekannt, die Bedieneinrichtung in Form einzelner Schalter unmittelbar auf dem Armaturenauslaufkörper anzuordnen.

In diesem Zusammenhang ist z. B. eine Duscheinrichtung, umfassend ein Aufputzgehäuse mit einem am oberen Ende angeordneten Armaturenauslaufkörper als Kopfbrause bekannt. Am Aufputzgehäuse befindet sich seitlich die Handbrause sowie auf der Front des Gehäuses wiederum die Bedieneinrichtung in Form von einzelnen Schaltern zur Betätigung der Duscheinrichtung. Ein minimalistisches Design, z. B. durch die Anordnung einer in die Decke eingelassenen Kopfbrause, ist hiermit nicht zu verwirklichen.

Des Weiteren soll eine Fläche, in der derartige Schalter z. B. in Form von Tastschaltern untergebracht sind, leicht zu säubern sein. Darüber hinaus soll sichergestellt sein, dass dann, wenn solche Schalter beispielsweise in einer Wand angeordnet sind, beispielsweise in einer Duschwand, eventuell eindringendes Wasser keinen Schaden anrichtet. Auch soll, wie bereits ausgeführt, die Anordnung und Ausbildung der Schalter derart sein, dass diese integraler Bestandteil des Designs eines Badobjektes, z. B. einer Dusche, sind oder zumindest sein können.

Zusammenfassend bedeutet dies, dass der Stand der Technik zum einen voluminöse Thermostatarmaturen als Aufputzeinheiten bietet, die ein Bedienfeld zeigen, um räumlich hiervon getrennte Armaturenauslaufkörper zu betätigen. Zum anderen bietet der Stand der Technik z. B. für Duschen Aufputzgehäuse mit am oberen Ende abgewinkeltem Armaturenauslaufkörper als Kopfbrause, wobei die Bedienung durch Schalter auf dem Gehäuse erfolgt. Ein minimalistisches Design ist durch keinen Stand der Technik zu verwirklichen.

Schalter einer Bedieneinrichtung, mit denen bei Badobjekten ein minimalistisches Design zu verwirklichen ist, sind solche, die nicht weiter auffallen bzw. im Bad als Designobjekt fungieren können

Um diesen Prämissen zu genügen, ist sicherzustellen, dass ein solcher Schalter im Wesentlichen oder nahezu außenhautbündig in dem flächigen Objekt, beispielsweise einer Wand oder einer ebenen Fläche, bei z. B. einem Waschbecken, angeordnet werden kann. Insbesondere hierdurch lässt sich zum einen ein solches Objekt äußerst einfach sauber halten und darüber hinaus stören keine überstehenden Kanten die Optik des Objektes insgesamt.

In diesem Zusammenhang ist bereits aus der GB 23 11 723 A bekannt, ein Gehäuse für einen Waschtisch vorzusehen, wobei die Schalter zur Betätigung z. B. des Wasserauslaufes oberflächengleich in dem Gehäuse angeordnet sind. Auf welche Weise die Fixierung der Schalter in dem Gehäuse erfolgt, ist nicht erläutert.

Das heißt, der Erfindung liegt die Aufgabe zugrunde, einen Schalter der eingangs genannten Art bereitzustellen, der einerseits leicht zu fixieren ist und andererseits durch die Halterung das Eindringen von Feuchtigkeit verhindert wird. Darüber hinaus soll der Schalter auch oberflächenbündig in der Verkleidung einsitzen.

Zur Lösung der Aufgabe wird erfindungsgemäß die Vorrichtung gemäß Anspruch 1 vorgeschlagen. Teure Bäder in Premium Hotels werden häufig in Naturstein ausgebildet, wobei z. B. auch die Wände mit Naturstein verkleidet sind. Derartige Verkleidungen aus Naturstein für Wände haben eine Stärke von 18 bis 22 mm, wobei die Stärke im Vorhinein nicht ohne erheblichen fertigungstechnischen Aufwand ganz genau bestimmbar ist. Hinter der Steinschicht, beispielsweise aus Naturstein, befindet sich ein Kleberbett und eine Abdichtung, wobei sich hinter der Abdichtung häufig eine Gipskartonwand verbirgt, die vor Feuchtigkeit geschützt werden muss. Der Wandbelag aus Naturstein als Verkleidung weist nun ein oder mehrere Öffnungen oder Bohrungen zur Aufnahme eines oder mehrer Schalter auf, wobei das Kissen in die entsprechende Öffnung der Verkleidung eingeklebt wird und zwar derart, dass der Schalter, der durch das Kissen aufgenommen wird, im Wesentlichen außenhautbündig mit der Oberfläche der Wand abschließt.

Weitere vorteilhafte Merkmale sind den Unteransprüchen zu entnehmen. So ist insbesondere vorgesehen, dass das Kissen, das aus einem elastisch nachgiebigen Kunststoff besteht, eine Bohrung für den Schalter aufweist. Der Schalter, der insbesondere als piezoelektrischer Schalter ausgebildet ist, besitzt einen Schalterkörper in Form eines zylindrischen Rings, wobei auf der Oberseite des zylindrischen Rings der über den Ring überstehende Teller vorgesehen ist. Mit dem Schalterkörper lagert der Schalter in der Bohrung des Kissens derart, dass der Teller auf dem Kissen aufliegt. Zur Fixierung des Schalters in dem als Halterung dienenden Kissen ist nun nach einem Merkmal der Erfindung vorgesehen, dass der Schalterkörper in die Bohrung des Kissen gepresst wird. Diese Pressverbindung ist so ausgelegt, dass der Schalter im Revisionsfall wieder aus der Bohrung des Kissens herausgezogen werden kann.

Sollte je nach Material des Verkleidungselements eine reine Klebeverbindung mit dem Kissen nicht ausreichend stabil sein, ist nach einem weiteren Merkmal der Erfindung vorgesehen, dass das Kissen zusätzlich auf einem Bock lagert, der in der Bohrung des Verkleidungselementes befestigt ist. Der Bock dient schlussendlich dazu, zu verhindern, dass bei übermäßiger Gewaltanwendung der Schalter durch die Bohrung hindurchgedrückt wird. Das heißt, der Bock stellt eine zusätzliche Maßnahme dar, um neben der Verklebung des Kissens in der Bohrung des Verkleidungselementes den Schalter in der Bohrung zu fixieren, sofern eine reine Klebeverbindung materiälspezifisch nicht mit ausreichender Festigkeit herstellbar ist.

Nach einem weiteren Merkmal der Erfindung sind die Schenkel des im Querschnitt U-förmigen Bockes endseitig zu beiden Seiten abgehend jeweils mit einem Flügel versehen, wobei die Flügel eine Ausnehmung in der Bohrung des Verkleidungselementes hintergreifen. Auch der Bock kann durch eine Klebverbindung in der Bohrung des Verkleidungselementes fixiert werden.

Anhand der Zeichnungen wird die Erfindung beispielhaft anhand einer Montage in einer Natursteinplatte näher erläutert.
- Figur 1: zeigt schematisch den Schalter im eingebauten Zustand;
- Figur 2: zeigt schematisch den Schalter im eingebauten Zustand mit zusätzlichem Bock;

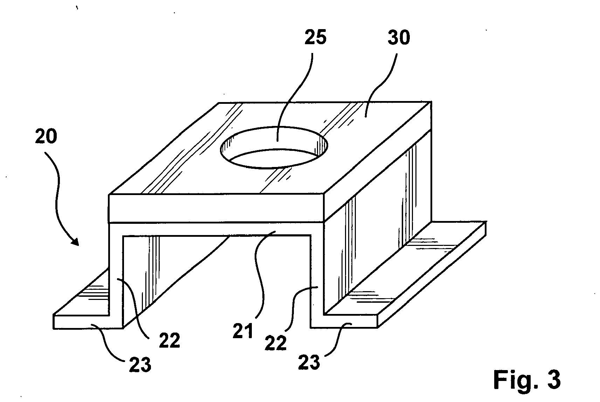

- Figur 3: zeigt den Bock zur Aufnahme des Schalters in perspektivischer Darstellung.

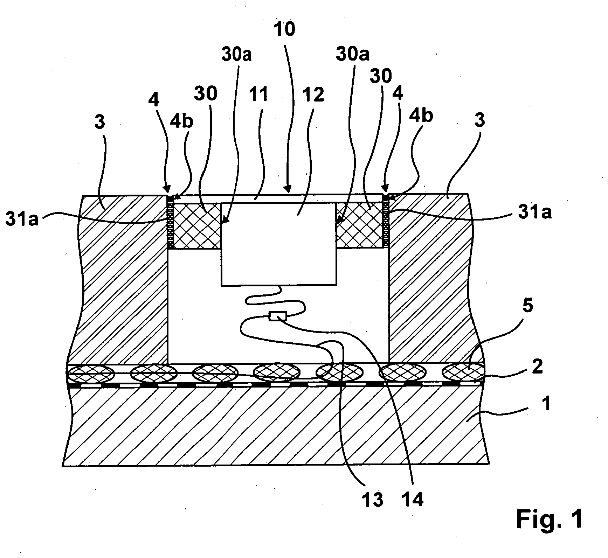

Wie bereits ausgeführt bestehen die Wände bei Bädern, insbesondere in Hotels, häufig aus sogenannten Gipskartonwänden 1, auf denen sich eine , Abdichtung 2 gegen eindringende Feuchtigkeit befindet, wobei auf dieser Abdichtung 2, beispielsweise einer Folie, ein etwa 5 mm dickes Kleberbett angeordnet ist, auf dem schlussendlich (insbesondere bei hochwertigen Bädern) ein Natursteinbelag 3 angeordnet ist. Im Bereich der Aufnahme für den Schalter 10 besitzt die Schicht aus Naturstein 3 eine Bohrung 4. In der Bohrung 4 ist das mit 30 bezeichnete Kissen aus einem elastischen Kunststoff eingeklebt (Figur 1). Insofern ist zwischen Kissen 30 und Wandung der Natursteinschicht 3 die Kleberschicht 31a vorgesehen. Der Schalterkörper 12 des Schalters 10 ist durch eine Pressverbindung in der Bohrung 30a des Kissens 30 fixierbar. Durch die Pressverbindung besteht die Möglichkeit, den Schalter im Revisionsfall leicht austauschen zu können. Die Pressverbindung sorgt allerdings auch für die erforderliche Abdichtung gegen Feuchtigkeit. Der Teller 11 des Schalters 10 liegt auf dem Kissen 30 auf, und zwar bündig mit der Oberseite der Schicht aus Naturstein.

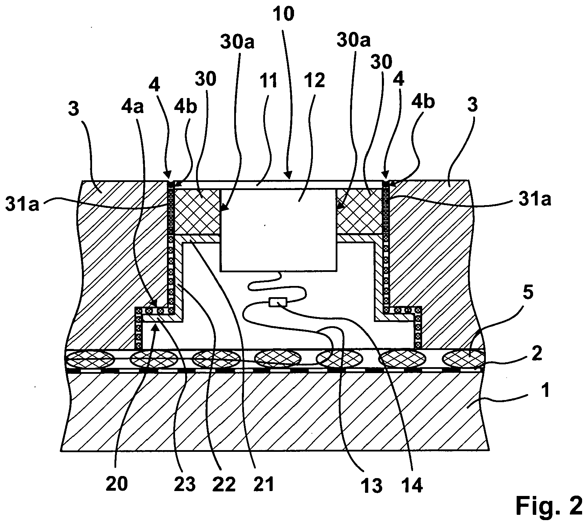

Nach einer Variante (Figur 2) ist die Bohrung 4 mit einem Hinterschnitt 4a versehen, wenn zusätzlich ein Bock 20 vorgesehen ist, um das Kissen zu stützen. Zur Aufnahme des insgesamt mit 10 bezeichneten Schalters dient das Kissen 30, das sich über dem Bock 20 befindet und das im Bedarfsfall - wie ausgeführt - durch den Bock unterstützend gehalten wird. Der Bock 20 ist im Querschnitt U-förmig mit einem Steg 21 und zwei Schenkeln 22 ausgebildet, wobei ein jeder Schenkel 22 endseitig nach außen abstehend einen Flügel 23 aufweist, wie sich dies insbesondere in Anschauung von Figur 2 ergibt. Der Bock 20 zeigt auf dem Steg 21 eine Öffnung 25 zur Aufnahme des Schalters 10, wobei auf dem Steg 21 des Bockes 20 darüber hinaus das Kissen 30 mit einer entsprechenden Bohrung 30a zur Aufnahme des Schalters angeordnet ist. Ein solches Kissen 30 ist aus einem elastischen Kunststoff hergestellt und dient der Auflage des Tellers 11 des Schalters 10.

Durch die Bohrung 25 im Bock und die Bohrung 30a des Kissens 30 hindurch ragt der Schalterkörper 12 des Schalters 10, wie dies aus Figur 2 deutlich wird. Der Schalterkörper 12 weist ein Kabel 13 auf, das durch einen Stecker 14 mit einem im Kleberbett 5 geführten Kabel verbindbar ist, das zu der elektrisch ansteuerbaren wasserführenden Thermostatarmatur geführt wird (Figur 1, Figur 2).

Für den Einbau in Bezug auf die Variante 2 gilt nun Folgendes:
Wie bereits an anderer Stelle erläutert, variieren Natursteinplatten in ihrer Dicke immer um einige Millimeter. Um nun sicherzustellen, dass bei gleichbleibender Ausbildung des Bockes 20 zur Aufnahme des Schalters der Schalter 10 immer im Wesentlichen mit der Oberseite der Natursteinoberfläche abschließen kann, kann die Differenz in der Stärke der Natursteinplatten von bis zu 4 mm dadurch ausgeglichen werden, dass im Bereich der Flügel 23 des Bockes mehr oder weniger starke Klebermassewulste aufgebracht werden. Der Bock 20 ist allerdings nicht nur im Bereich der Flügel 23 mit der Natursteinplatte verklebt, sondern auch noch mit seinen Schenkeln 22. Zum Zweck der Abdichtung der Bohrung dient allerdings ebenfalls das Kissen 30, wobei dieses Kissen seitlich auch mit der Wandung der den Schalter aufnehmenden Bohrung in der Natursteinplatte verklebt sein kann. Der Schalter 10 wird somit allein durch das Kissen gehalten, da dieses mit der Wandung der Bohrung verklebt ist. Der Bock 20 dient in diesem Fall lediglich der zusätzlichen Sicherung des Schalters, sofern eine reine Klebeverbindung zwischen Kissen und Bohrung des Verkleidungselementes nicht ausreichend stabil herstellbar ist.

Der Spalt zwischen Teller 11 des Schalters 10 und der Wandung in der Öffnung in der Natursteinplatte kann beispielsweise mit Silikon (Pfeil 4b) ausgespritzt sein oder offen bleiben. Wesentlich bei dieser Ausgestaltung für die Aufnahme eines Schalters ist, dass sich der gesamte Schalter oberhalb des Kleberbettes befindet, d. h. selbst dann, wenn die Abdichtung am Schalter, aus welchen Gründen auch immer, nicht funktionsfähig ist, würde keine Feuchtigkeit in die Gipskartonwand eintreten können.

Der Schalter 10 ist bei keiner der beiden Varianten mit dem Kissen 30 verklebt, sondern ist lösbar mit dem Kissen 30 durch eine Pressverbindung verbunden, so dass bei Beschädigung des Schalters ein Austausch des Schalters möglich ist, ohne das Kissen aus der Bohrung herausnehmen zu müssen. Die Abdichtung erfolgt durch die lösbare Pressverbindung zwischen dem Schalterkörper 12 und der elastischen Bohrungswandung 30a des Kissens 30.

## Patentansprüche

1. Vorrichtung umfassend einen Schalter (10) einer Steuerung zur Betätigung einer elektrischen Thermostatarmatur, wobei der Schalter (10) durch eine Bohrung (4) in einem Verkleidungselement (3), z. B. eines Waschtisches oder einer Wand, revisionierbar aufnehmbar ist, wobei der Schalter (10) einen Schalterkörper (12) und einen überstehenden Teller (11) umfasst,
**dadurch gekennzeichnet,**
**dass** die Vorrichtung ein Kissen (30) aufweist, wobei das Kissen (30) eine Bohrung (30a) für die Aufnahme des Schalterkörpers (12) aufweist, wobei der Schalter (10) mit dem Schalterkörper (12) derart in der Bohrung (30a) des Kissens (30) lagert, dass sein Teller (11) auf dem Kissen (30) aufliegt, wobei das Kissen (30) in der Bohrung (4) des Verkleidungselements (3) fixiert ist, und wobei durch das Kissen (30) die revisionierbare Fixierung des Schalters (10) in der Bohrung (4) des Verkleidungselements (3) und die Dichtigkeit im Übergang vom Kissen (30) zur Wandung der Bohrung (4) in dem Verkleidungselement (3) bewirkt wird.

2. Vorrichtung nach Anspruch 1,
**dadurch gekennzeichnet,**
**dass** das Kissen (30) in der Bohrung (4) eingeklebt ist.

3. Vorrichtung nach einem der voranstehenden Ansprüche,
**dadurch gekennzeichnet,**
**dass** das Kissen (30) aus einem elastisch nachgiebigen Kunststoffmaterial besteht.

4. Vorrichtung nach einem der voranstehenden Ansprüche, **dadurch gekennzeichnet,**
**dass** das Kissen (30) auf einem Bock (20) lagert, der in der Bohrung des Verkleidungselementes befestigt ist.

5. Vorrichtung nach Anspruch 4,
**dadurch gekennzeichnet,**
**dass** der Schenkel des Bockes (20) endseitig zu beiden Seiten abgehend jeweils einen Flügel aufweist.

6. Vorrichtung nach Anspruch 1,
**dadurch gekennzeichnet,**
**dass** der Schalter (10) in der Bohrung (30a) des Kissens (30) eingepresst ist.

## Claims

1. A device comprising a switch (10) of a control unit for actuating an electric thermostat fitting, wherein the switch (10) can be received in a bore (4) in a lining element (3), e.g. of a washbasin or of a wall (1), in such a manner that it can be inspected, wherein the switch (10) includes a switch body (12) and a protruding disc (11),
**characterized in that**
the device comprises a pad (30), wherein the pad (30) comprises a bore (30a) for receiving the switch body (12), wherein the switch (10) with the switch body (12) is mounted in the bore (30a) of the pad (30) in such a manner that its disc (11) rests on the pad (30), wherein the pad (30) is secured in the bore (4) of the lining element (3) and wherein the pad (30) brings about the securement of the switch (10) in the bore (4) of the lining element (3), in such a manner that it can be inspected, and the impermeability of the transition from the pad (30) to the wall of the bore (4) in the lining element (3).

2. The device according to claim 1,
**characterized in that**
the pad (30) is bonded in the bore (4).

3. The device according to one of the afore-mentioned claims,
**characterized in that**
the pad (30) consists of an elastically resilient synthetic material.

4. The device according to one of the afore-mentioned claims,
**characterized in that**
the pad (30) is carried on a support (20) that is fastened in the bore of the lining element.

5. The device according to claim 4,
**characterized in that**
the leg of the support (20) comprises at its end respectively one wing, which projects therefrom on both sides.

6. The device according to claim 1,
**characterized in that**
the switch (10) is press-fitted into the bore (30a) of the pad (30).

## Revendications

1. Dispositif comprenant un commutateur (10) d'un dispositif de commande pour actionner une armature de thermostat électrique, le commutateur (10) pouvant être reçu dans un perçage (4) d'un élément de revêtement (3), par exemple d'un lavabo ou d'une paroi (1), de telle manière qu'il peut être révisé, le commutateur (10) comprenant d'un corps de commutateur (12) et un disque (11) faisant saillie,
**caractérisé en ce que**
le dispositif comprend un coussinet (30), le coussinet (30) comprenant un perçage (30a) destiné à recevoir le corps de commutateur (12), le commutateur (10) avec le corps de commutateur (12) étant monté dans le perçage (30a) du coussinet (30) de telle manière que son disque (11) repose sur le coussinet (30), le coussinet (30) étant fixé dans le perçage (4) de l'élément de revêtement (3) et le coussinet (30) assurant la fixation révisable du commutateur (10) dans le perçage (4) de l'élément de revêtement (3) et l'étanchéité de la transition entre le coussinet (30) et la paroi du perçage (4) dans l'élément de revêtement (3).

2. Dispositif selon la revendication 1,
**caractérisé en ce que**
le coussinet (30) est encollé dans le perçage (4).

3. Dispositif selon l'une des revendications précédentes,
**caractérisé en ce que**
le coussinet (30) est composé d'une matière synthétique élastiquement souple.

4. Dispositif selon l'une des revendications précédentes,
**caractérisé en ce que**
le coussinet (30) est monté sur un support (20) fixé dans le perçage de l'élément de revêtement.

5. Dispositif selon la revendication 4,
**caractérisé en ce que**
la branche du support (20) comprend à son extrémité respectivement une aile s'écartant des deux côtés.

6. Dispositif selon la revendication 1,
**caractérisé en ce que**
le commutateur (10) est pressé dans le perçage (30a) du coussinet (30).
